# DEMANDE DE BREVET EUROPEEN

(11) **EP 3 764 492 A1**
(43) Date de publication de la demande: **13.01.2021**
(21) Numéro de dépôt: 20185365.2
(22) Date de dépôt: 10.07.2020
(51) Int. Cl.: H02G 1/14, H02G 15/18, H02G 3/08

(54) **PROCEDE DE FABRICATION D'UNE JONCTION ENTRE LES ECRANS DE DEUX CABLES ELECTRIQUES ET JONCTION CORRESPONDANTE**

(30) Priorité: 11.07.2019 FR 1907791
(71) Demandeur: Nexans, 92400 Courbevoie (FR)
(72) Inventeur: SOUSA, Marcel, 08350 DONCHERY (FR)
(74) Mandataire: Ipsilon

(57) **Abrégé**

Pour fabriquer une jonction entre les écrans de deux câbles électriques assemblés par un raccord à serrage mécanique, on place (11) un tube autour des deux câbles de façon qu'il couvre le raccord et les écrans ; on applique (13) successivement sur le tube une feuille conductrice formant une connexion des écrans, et une gaine protectrice élastique ; on retire (15) le tube ; on rétracte (15) la gaine protectrice élastique de façon à comprimer la feuille conductrice autour des écrans des deux câbles.

## Description

La présente invention se rapporte à un procédé de fabrication d'une jonction entre les écrans de deux câbles électriques, ainsi qu'à une jonction réalisée par un tel procédé.

Elle appartient au domaine des câbles électriques.

Lorsque deux câbles électriques doivent être assemblés, on doit ôter l'ensemble des couches qui les composent pour pouvoir accéder à leur âme et faire leur jonction avec un raccord mécanique. Une fois le raccordement effectué, il faut reconstituer et faire la jonction des différentes couches composant les deux câbles pour assurer une bonne continuité de celles-ci. La reconstitution et la jonction de l'écran respectif des deux câbles en fait partie et doit généralement s'adapter à tous les diamètres et types de câbles et être de fabrication économique.

Actuellement, on utilise souvent un procédé de fabrication qui utilise un manchon tressé (couramment appelé « sleeve braid » en anglais) pour réaliser la jonction.

Les principales étapes de ce procédé connu consistent à prendre un touret sur lequel le manchon tressé est enroulé, à y couper un manchon à longueur, à l'ouvrir et l'enfiler sur un cylindre support, à replier ensuite les brins du manchon et les coller sur le milieu du cylindre, à expanser et déposer une gaine protectrice sur le manchon tressé et à replier à nouveau les brins du manchon tressé sur la gaine protectrice.

Ce procédé connu présente de nombreux inconvénients.

En effet, les opérations d'expansion et dépôt de la gaine protectrice sont généralement entièrement automatisées, mais pour ce qui concerne le reste des opérations, elles s'avèrent difficiles et très compliquées à automatiser, ce qui augmente le coût de fabrication.

De plus, les brins en bout de manchon n'ont pas de tenue et s'éparpillent généralement dès le poste de découpe.

Par ailleurs, vu la multitude de brins, il est difficile de trouver l'ouverture du manchon avant de l'enfiler sur le cylindre.

En outre, le manque précité de tenue des brins et la difficulté précitée d'ouverture du manchon rendent difficile l'automatisation de la pose du manchon tressé.

Au surplus, les opérations sont effectuées sur plusieurs postes et par des opérateurs différents, d'où un coût de fabrication élevé ainsi que l'apparition possible de défauts de qualité, suivant la dextérité des opérateurs et/ou le risque d'avoir un brin oublié ou mal replié.

Par ailleurs, le positionnement et le centrage du manchon sur le corps de jonction sont approximatifs et il existe une tolérance importante sur la longueur du manchon, en partie en raison des différentes opérations de coupe, pliage, ouverture, nouveau pliage, intervention d'un robot pour l'expansion et le dépôt de la gaine, etc.

De plus, une fois installé, le manchon tressé peut présenter des interstices plus ou moins importants qui compromettent sa fonction de barrière physique pour la protection des tiers.

En outre, les extrémités des brins sont très agressives, ce qui engendre un risque de blessure pour les opérateurs et/ou un risque de perforation de la gaine protectrice, dans le cas où l'extrémité d'un brin reste nue lors de la fabrication ou lors de l'installation par le monteur sur le terrain.

La présente invention a pour but de remédier à au moins un des inconvénients précités de l'art antérieur.

Dans ce but, la présente invention propose un procédé de fabrication d'une jonction entre les écrans de deux câbles électriques assemblés par un raccord à serrage mécanique, remarquable en ce qu'il comporte des étapes suivant lesquelles :
on place un tube autour des deux câbles de façon qu'il couvre le raccord et les écrans ;
on applique successivement sur le tube une feuille électriquement conductrice formant une connexion des écrans, et une gaine protectrice élastique ;
on retire le tube ;
on rétracte la gaine protectrice élastique de façon à comprimer la feuille conductrice autour des écrans des deux câbles.

Ainsi, par l'utilisation combinée d'une feuille conductrice en lieu et place d'un manchon tressé et d'une technique de rétraction pour maintenir la feuille conductrice en place, l'invention permet d'automatiser l'ensemble des opérations du procédé de fabrication, réduisant ainsi son coût, augmentant l'ergonomie et la sécurité en éliminant le risque de blessure d'un opérateur manuel et augmentant également la répétabilité, la précision et la qualité des processus.

En outre, la feuille conductrice une fois installée présente une barrière physique totale et une bonne étanchéité contrairement au manchon tressé, ce qui permet d'obtenir une connexion sans corrosion galvanique et de garantir une totale protection des tiers.

De plus, la zone de contact électrique avec les écrans ou prises d'écran est surfacique, donc plus importante et plus constante, car pour le manchon tressé, le contact est linéique et aléatoire, en fonction du nombre de brins amassés et présents sur la zone de contact des écrans de câbles.

De plus, l'industrialisation est simple à mettre en œuvre, ce procédé est adapté à tout type et tout diamètre de câble et l'invention permet d'améliorer la cadence de production.

L'invention procure également une jonction plus esthétique et attractive car l'aspect du produit, avec la feuille conductrice dont la surface est brillante, est donc plus luxueux que celui d'une jonction avec un manchon tressé.

Dans un mode particulier de réalisation, lors de l'étape d'application, l'application de la feuille conductrice et de la gaine protectrice comporte des étapes suivant lesquelles :
on déroule un rouleau de feuille conductrice ;
on réalise des fentes sur chacun des bords latéraux de la feuille conductrice, en continu lors du déroulement du rouleau, de façon à obtenir des franges ;
on fixe l'extrémité déroulée de la feuille conductrice sur un premier ensemble comportant le tube ;
on fait tourner ce premier ensemble lors du déroulement du rouleau de façon à enrouler la feuille conductrice autour du premier ensemble, suivant un nombre de tours prédéterminé correspondant à une aire requise de la section transversale de la jonction ;
après déroulement d'une longueur prédéterminée de rouleau correspondant au nombre de tours prédéterminé, on coupe la feuille conductrice et on fixe l'extrémité coupée de la feuille conductrice sur un second ensemble comportant le tube et l'extrémité de la feuille conductrice enroulée autour du premier ensemble ;
on expanse et on dépose la gaine protectrice sur le second ensemble ;
on replie à 180° sur le premier ensemble les franges de la feuille conductrice sur la gaine protectrice.

Dans un mode particulier de réalisation, lors de l'étape d'application, préalablement à l'application successive de la feuille conductrice et de la gaine protectrice, on applique un corps de jonction sur le tube et préalablement à l'étape de rétraction de la gaine protectrice, on rétracte le corps de jonction sur le raccord.

Dans ce mode de réalisation, le premier ensemble comporte le tube et le corps de jonction et le second ensemble comporte le tube, le corps de jonction et l'extrémité de la feuille conductrice enroulée autour du premier ensemble.

Selon une caractéristique particulière possible, le tube support peut être revêtu d'un film glissant, ou d'une ou plusieurs surfaces glissantes, ce qui permettra de déposer délicatement l'ensemble des composants présents sur le tube lors du transfert sur la jonction par retrait du tube. Cela évite d'endommager la feuille conductrice, garantissant ainsi un contact électrique fiable.

Selon une caractéristique particulière possible, on peut fixer l'extrémité déroulée de la feuille conductrice sur le premier ensemble et fixer l'extrémité coupée de la feuille conductrice sur le second ensemble par collage.

Le maintien adhésif de la feuille conductrice, donc sans pièces additionnelles, permet de ne pas augmenter l'encombrement ni la masse de la jonction.

Dans un mode particulier de réalisation, on rétracte la gaine protectrice élastique par une technique de rétraction à froid (en anglais « cold shrink »).

Cette technique offre un haut niveau de qualité, une grande facilité de mise en œuvre et permet une installation rapide sans outillage. Elle permet notamment d'obtenir un meilleur contact électrique que la technique de rétraction par la chaleur (en anglais « heat shrink »), car le contact reste sous contrainte et conserve son élasticité dans le temps, ce qui garantit une meilleure continuité des écrans des câbles et une meilleure sécurité du point de vue de la protection des utilisateurs.

Selon une caractéristique particulière possible, la feuille conductrice peut être en métal, par exemple en cuivre éventuellement recuit ou étamé, ou bien en aluminium étamé.

Le cuivre recuit permet d'obtenir une haute ductilité, autrement dit, une élongation très importante à la rupture.

Le choix de l'aluminium étamé permet quant à lui de réduire la masse de moitié et ainsi de diviser le coût de la matière par 6 environ, ce dernier facteur dépendant du cours des matériaux concernés.

En variante, la feuille conductrice peut être réalisée en un ou plusieurs matériaux composites.

Selon une caractéristique particulière possible, la gaine protectrice élastique peut être en EPDM (éthylène propylène diène monomère) ou en silicone.

Dans un mode particulier de réalisation, la feuille conductrice est réalisée par dépôt électrolytique de cuivre sur un tambour.

Cela confère à la feuille conductrice une meilleure adhérence d'un côté mat de la feuille du fait de sa rugosité de surface, l'état de surface brillant et passivé de l'autre côté de la feuille présentant une bonne résistance à l'oxydation et une excellente conductivité pour le contact électrique.

Dans un mode particulier de réalisation, la feuille conductrice est réalisée par laminage ou co-laminage.

Dans le même but que celui indiqué plus haut, la présente invention propose également une jonction entre les écrans de deux câbles électriques, remarquable en ce qu'elle est réalisée par un procédé de fabrication tel que succinctement décrit ci-dessus.

Les caractéristiques particulières et avantages de la jonction étant similaires à ceux de son procédé de fabrication, ils ne sont pas répétés ici.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est un logigramme présentant les principales étapes d'un procédé de fabrication d'une jonction conforme à la présente invention, dans un premier mode particulier de réalisation ;
[Fig. 2] est un logigramme présentant les principales étapes d'un procédé de fabrication d'une jonction conforme à la présente invention, dans un second mode particulier de réalisation ;
[Fig. 3] est un ensemble de vues schématiques illustrant les principales étapes de la phase d'application d'une feuille conductrice et d'une gaine protectrice élastique conformément à la présente invention, dans un mode particulier de réalisation ;
[Fig. 4] est une vue schématique d'une jonction conforme à la présente invention, dans un premier mode particulier de réalisation ; et
[Fig. 5] est une vue schématique d'une jonction conforme à la présente invention, dans un second mode particulier de réalisation.

### Description de mode(s) de réalisation

On considère deux câbles électriques assemblés par un raccord à serrage mécanique, chacun des câbles comportant un écran de câble. Le procédé de fabrication conforme à l'invention vise à fabriquer une jonction connectant les écrans des deux câbles.

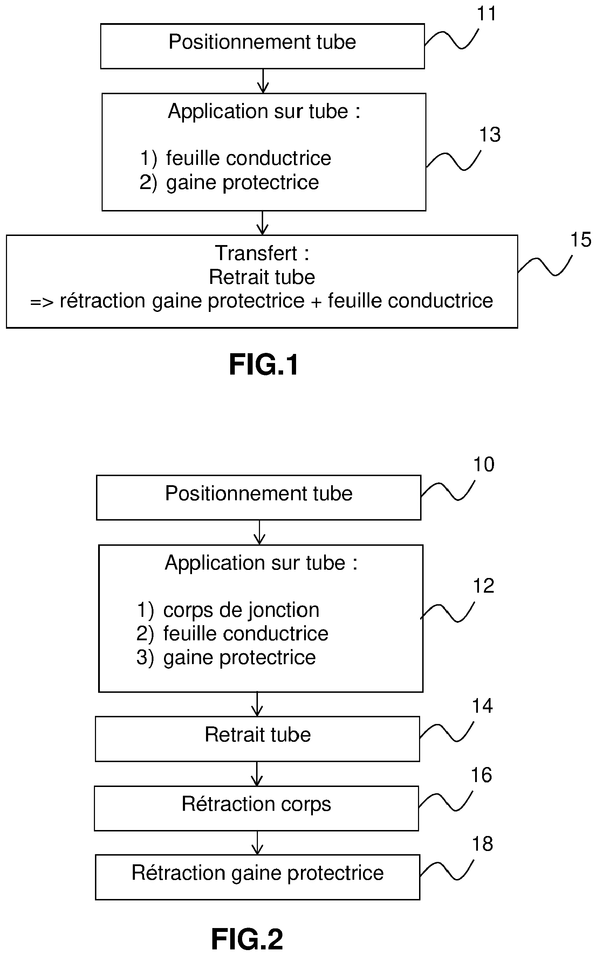

Comme le montre la figure 2, lors d'une première étape 10 de positionnement, on place un tube autour des deux câbles, au niveau de leurs extrémités assemblées, centré sur le raccord à serrage mécanique, de façon que ce tube couvre le raccord et les deux écrans. Ce tube a une fonction de support des éléments qui vont constituer la jonction et sera retiré lors de l'installation finale sur le terrain par le monteur, comme décrit ci-après.

Puis lors d'une étape 12 d'application, on applique successivement sur le tube un corps de jonction dans un état expansé, une feuille conductrice connectant électriquement les deux écrans entre eux et une gaine protectrice élastique également dans un état expansé.

Le corps de jonction peut par exemple être en EPDM extrudé triple épaisseur, cet exemple n'étant nullement limitatif.

La gaine protectrice élastique peut par exemple être en EPDM, ou bien en silicone.

La feuille conductrice peut être réalisée dans une grande variété de matériaux conducteurs utilisés seuls, ou en combinaison afin d'améliorer les propriétés de résistance mécanique, électrique, thermique, à la corrosion et/ou d'améliorer la dissipation de la chaleur.

La feuille conductrice est par exemple en métal.

Ce métal peut être du cuivre recuit, du cuivre étamé ou encore de l'aluminium revêtu d'une couche d'étain. La zone de revêtement de protection peut être partielle ou totale, et peut concerner un seul côté de la feuille conductrice ou les deux côtés de celle-ci.

En variante, la feuille conductrice peut être un composite constitué de plusieurs matières co-laminées dont au moins une est électriquement conductrice ou une matière électriquement conductrice comportant un ou plusieurs revêtements. La feuille conductrice peut être une matière composite avec ou sans traitement de surface à base de plastique, carbone, étain, aluminium, cuivre, argent, or, etc., au moins un des constituants de la matière composite étant électriquement conducteur. On peut ainsi conjuguer les propriétés de chaque matériau et optimiser les propriétés de la feuille conductrice du point de vue de la résistance mécanique, la dissipation thermique, la résistance thermique, la conductivité électrique, la flexibilité, la résistance à la corrosion, l'étanchéité, barrière mécanique ou mécanico-chimique contre les nuisibles, protection électromagnétique, etc.

La largeur et l'épaisseur de la feuille conductrice dépendent du type de câble et de la largeur nécessaire pour préparer la jonction, appelée communément champ de travail de la jonction. La largeur est typiquement de quelques centaines de mm, par exemple 500 mm. L'épaisseur est typiquement de quelques microns, par exemple 9, 12, 18 ou 35 microns. La feuille conductrice peut être composée d'une ou plusieurs bandes. Dans le cas de plusieurs bandes, un chevauchement minimum devra être respecté pour garantir la continuité entre celles-ci. Dans un autre mode de réalisation, une ou plusieurs bandes peuvent être enroulées hélicoïdalement sur le tube.

Après l'étape 12 d'application, on retire le tube au cours d'une étape 14 de retrait. A titre optionnel, le tube peut être revêtu d'un film glissant, ou d'une ou plusieurs surfaces glissantes. Ainsi, au moment du retrait du tube, lors du transfert, sur la jonction, de l'ensemble des composants présents sur le tube, ces composants seront déposés délicatement sur la jonction, évitant d'endommager la feuille conductrice et garantissant donc un contact électrique fiable.

Puis lors d'une étape 16 de rétraction, le corps de jonction se rétracte sur le raccord.

Lors d'une autre étape 18 de rétraction, qui peut être effectuée, soit à la suite de l'étape 16 de rétraction, soit simultanément à celle-ci, on rétracte la gaine protectrice, de façon à comprimer la feuille conductrice autour des écrans des deux câbles ou des prises d'écran.

Les étapes 16 et 18 de rétraction peuvent être effectuées par une technique de rétraction à froid (en anglais « cold shrink ») ou à chaud (en anglais « heat shrink »), avantageusement à froid.

La compression de la feuille conductrice au niveau de la zone de contact avec les écrans ou les prises d'écran des câbles peut être réalisée et/ou complétée par un ressort à force constante.

La figure 1 illustre un mode particulier de réalisation plus général que celui de la figure 2, où il n'y a pas de corps de jonction.

Dans ce mode de réalisation, le procédé de fabrication conforme à l'invention comporte une étape 11 de positionnement identique à l'étape 10 de positionnement de la figure 2.

L'étape 11 de positionnement est suivie d'une étape 13 d'application, où on applique successivement sur le tube la feuille conductrice et la gaine protectrice élastique dans un état expansé.

Après l'étape 13 d'application, on retire le tube au cours d'une étape 15 de retrait identique à l'étape 14 de retrait de la figure 2. La gaine protectrice se rétracte alors de façon à comprimer la feuille conductrice autour des écrans des deux câbles ou des prises d'écran, comme à l'étape 18 de la figure 2.

Dans un mode particulier de réalisation, l'application de la feuille conductrice puis de la gaine protectrice sur le corps de jonction, à l'étape 12 d'application de la figure 2, de même que l'application de la feuille conductrice puis de la gaine protectrice sur le tube, à l'étape 13 de la figure 1, peut se décomposer en une série d'étapes décrites ci-après.

On dispose initialement d'un rouleau 19 de feuille conductrice, qui est disposé sur une machine qui va automatiquement mettre le rouleau en rotation autour de son axe afin de dérouler la feuille conductrice, au cas où le processus de fabrication est automatisé.

Si la feuille conductrice est en cuivre, le rouleau susmentionné peut avoir été obtenu par exemple par dépôt électrolytique de cuivre sur un tambour. Typiquement, un tambour par exemple en titane sur lequel est enroulé un film tel qu'un film plastique ou dans une autre matière, est en rotation dans un bain d'électrolyte et est relié à un circuit électrique alimenté en courant. Ce circuit est également relié à une ou plusieurs anodes composées par exemple de sulfate de cuivre. Au fur et à mesure de la consommation des anodes qui crée un dépôt d'ions cuivre sur le film du tambour, on enroule le film revêtu de cuivre obtenu sur un rouleau situé hors du bain d'électrolyte.

En variante, le feuille conductrice en cuivre pourrait être obtenue par laminage de cuivre entre des rouleaux jusqu'à l'atteinte de l'épaisseur recherchée, puis recuit pour retrouver la ductilité du cuivre.

Dans encore une autre variante, une feuille conductrice composite pourrait être obtenue par un co-laminage consistant à laminer ensemble plusieurs matériaux.

De façon optionnelle, la feuille conductrice peut être étamée sur ses deux bords latéraux, sur une bande d'une longueur typiquement de quelques dizaines de mm, par exemple 50 mm, pour améliorer la zone de contact électrique avec les deux écrans des câbles et éviter la corrosion.

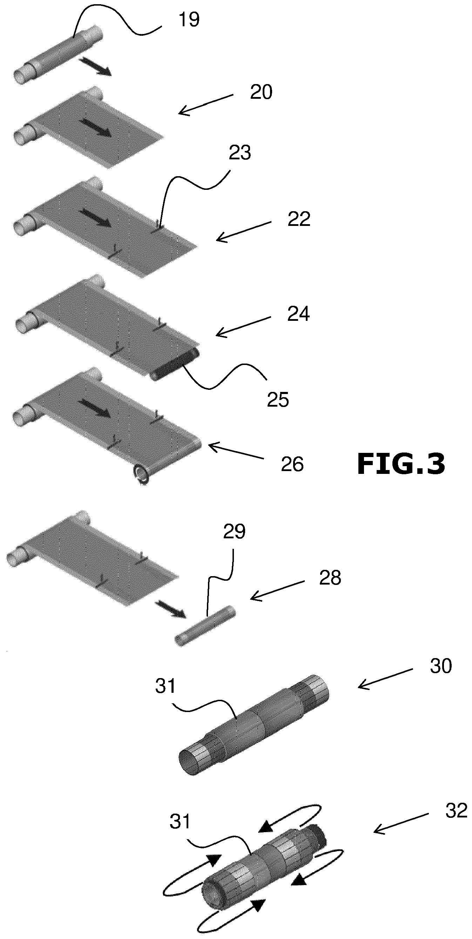

Comme le montre la figure 3, lors d'une étape 20, la machine déroule le rouleau 19 de feuille conductrice, cette opération étant symbolisée par une flèche sur le dessin.

Puis lors d'une étape 22, on réalise des fentes 23 sur chacun des deux bords latéraux de la feuille conductrice. Cette opération est effectuée de façon continue au fur et à mesure du déroulement du rouleau 19, de façon à obtenir des franges sur les deux bords latéraux de la feuille conductrice, sur toute la longueur de celle-ci.

Les franges permettront de replier à 180° la feuille conductrice, comme décrit ci-après, sans déchirure et d'améliorer la compression de la feuille conductrice dans les zones de contact avec les écrans des câbles ou des prises d'écran.

La longueur des franges dépend du type de câble, mais est typiquement de quelques cm à quelques dizaines de cm, par exemple environ 13 cm.

Puis lors d'une étape 24, on fixe l'extrémité déroulée de la feuille conductrice sur un premier ensemble 25 qui est formé par le tube et le corps de jonction dans le mode de réalisation de la figure 2 et formé uniquement par le tube dans le mode de réalisation de la figure 1.

Cette fixation peut par exemple être réalisée par collage au moyen d'une substance adhésive.

Puis lors d'une étape 26, on fait tourner le premier ensemble 25 lors du déroulement du rouleau 19, de façon à enrouler la feuille conductrice autour du premier ensemble 25, suivant un nombre de tours prédéterminé correspondant à une aire requise de la section transversale de la jonction. Cette section est typiquement de quelques mm², par exemple 16 ou 25 mm². Le nombre de tours dépend aussi de l'épaisseur de la feuille conductrice.

Puis lors d'une étape 28, après déroulement d'une longueur prédéterminée de rouleau 19 correspondant au nombre de tours précité, on coupe la feuille conductrice et on fixe, par exemple par collage comme à l'étape 24, l'extrémité coupée de la feuille conductrice sur un second ensemble 29 qui est formé par le tube, le corps de jonction et l'extrémité de la feuille conductrice enroulée autour du premier ensemble 25 dans le mode de réalisation de la figure 2 et formé uniquement par le tube et l'extrémité de la feuille conductrice enroulée autour du premier ensemble 25 dans le mode de réalisation de la figure 1.

Puis lors d'une étape 30 (illustrée en vue agrandie par rapport aux étapes précédentes), on expanse et on dépose la gaine protectrice 31 sur le second ensemble 29. De façon optionnelle, pour une jonction plus compacte, la gaine protectrice 31 peut être retroussée.

Enfin, de façon optionnelle, pour une jonction plus compacte, lors d'une étape 32 (illustrée à la même échelle que l'étape 30), on replie à 180° sur le premier ensemble 25, comme symbolisé par les quatre flèches courbes sur le dessin, les franges de la feuille conductrice, sur la gaine protectrice 31.

L'ensemble des étapes 20, 22, 24, 26, 28, 30 et 32 peut être automatisé.

Ensuite, à titre optionnel, de façon manuelle, on peut éjecter le produit fini du mandrin sur lequel il était disposé et l'entreposer dans un carton pour son transport.

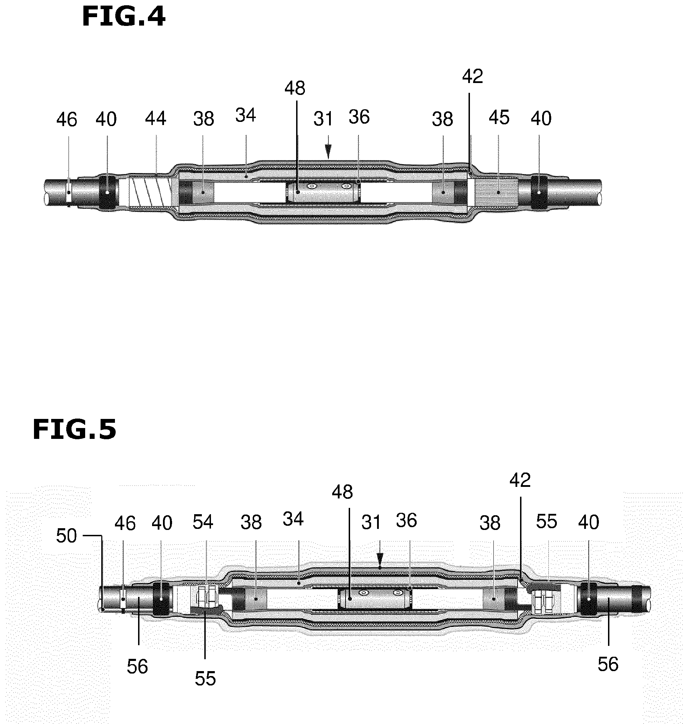

Le procédé conforme à l'invention permet d'obtenir une jonction telle que celle illustrée sur la figure 4.

Cette jonction comporte le corps 34 de jonction, par exemple un corps extrudé triple épaisseur en EPDM, éventuellement une plaque 36 par exemple bi-couche avec des mastics semi-conducteurs et de contrôle de champ, la gaine protectrice 31 élastique, par exemple en EPDM, éventuellement des régions 38 en mastic de contrôle de champ et 40 en mastic d'étanchéité, la feuille conductrice 42 qui forme une chaussette, un pare-vapeur 44, un écran 45 par exemple composé de fils et/ou de feuillards de cuivre, éventuellement une indication 46 de traçabilité, et le raccord 48 à serrage mécanique qui assemble les deux câbles. Dans ce mode de réalisation, il n'est pas nécessaire de prévoir une prise d'écran, car il suffit de dénuder la gaine protectrice 31 sur quelques centimètres pour faire directement la connexion à sa surface.

Le procédé conforme à l'invention permet également d'obtenir une jonction telle que celle illustrée sur la figure 5.

Les éléments désignés par les mêmes chiffres de référence sur les figures 4 et 5 sont identiques et ne sont donc pas décrits à nouveau ici.

La jonction de la figure 5 comporte deux prises d'écran 55 en lieu et place de l'écran 45, et des feuillards 54 de frette en lieu et place du pare-vapeur 44. Elle comporte en outre une interconnexion d'écran 50 reliée à l'une des deux prises d'écran 55. Les deux prises d'écran 55 sont insérées sous la gaine 56 des deux câbles. Elles viennent perforer l'écran, qui est par exemple un écran en aluminium contrecollé à la gaine 56 des deux câbles, afin de faire l'interface avec la feuille conductrice 42.

La longueur de la jonction dépend bien entendu du type de câble. Elle peut typiquement être de l'ordre de quelques centaines de mm, par exemple 650 mm.

Bien que le procédé de fabrication ait été décrit en lien avec une jonction pour câbles électriques, la feuille conductrice qui y est utilisée peut trouver de nombreuses autres applications, dans des domaines aussi variés que la fabrication des circuits imprimés, les cartes bancaires, les batteries électriques pour l'automobile, l'aéronautique, etc.

## Revendications

1. Procédé de fabrication d'une jonction entre les écrans de deux câbles électriques assemblés par un raccord (48) à serrage mécanique, **caractérisé en ce qu'**il comporte des étapes suivant lesquelles :
on place (10 ; 11) un tube autour des deux câbles de façon qu'il couvre le raccord (48) et les écrans ;
on applique (12 ; 13) successivement sur le tube une feuille électriquement conductrice (42) formant une connexion des écrans, et une gaine protectrice (31) élastique ;
on retire (14 ; 15) le tube ;
on rétracte (18 ; 15) la gaine protectrice (31) élastique de façon à comprimer la feuille conductrice (42) autour des écrans des deux câbles.

2. Procédé selon la revendication 1, **caractérisé en ce que** lors de l'étape (12 ; 13) d'application, l'application de la feuille conductrice (42) et de la gaine protectrice (31) comporte des étapes suivant lesquelles :
on déroule (20) un rouleau (19) de feuille conductrice (42) ;
on réalise (22) des fentes (23) sur chacun des bords latéraux de la feuille conductrice (42), en continu lors du déroulement du rouleau (19), de façon à obtenir des franges ;
on fixe (24) l'extrémité déroulée de la feuille conductrice (42) sur un premier ensemble (25) comportant le tube ;
on fait tourner (26) ledit premier ensemble (25) lors du déroulement du rouleau (19) de façon à enrouler la feuille conductrice (42) autour dudit premier ensemble (25), suivant un nombre de tours prédéterminé correspondant à une aire requise de la section transversale de la jonction ;
après déroulement d'une longueur prédéterminée de rouleau (19) correspondant audit nombre de tours prédéterminé, on coupe (28) la feuille conductrice (42) et on fixe l'extrémité coupée de la feuille conductrice (42) sur un second ensemble (29) comportant le tube et l'extrémité de la feuille conductrice (42) enroulée autour dudit premier ensemble (25) ;
on expanse et on dépose (30) la gaine protectrice (31) sur ledit second ensemble (29) ;
on replie (32) à 180° sur ledit premier ensemble (25) les franges de la feuille conductrice (42) sur la gaine protectrice (31).

3. Procédé selon la revendication 1 ou 2, **caractérisé en ce que**, lors de l'étape (12) d'application, préalablement à l'application successive de la feuille conductrice (42) et de la gaine protectrice (31), on applique un corps (34) de jonction sur le tube et préalablement à l'étape (18) de rétraction de la gaine protectrice (31), on rétracte (16) le corps (34) de jonction sur le raccord (48).

4. Procédé selon les revendications 2 et 3, **caractérisé en ce que** le premier ensemble (25) comporte le tube et le corps (34) de jonction et le second ensemble (29) comporte le tube, le corps (34) de jonction et l'extrémité de la feuille conductrice (42) enroulée autour dudit premier ensemble (25).

5. Procédé selon la revendication 2 ou 4, **caractérisé en ce qu'**on fixe l'extrémité déroulée de la feuille conductrice (42) sur ledit premier ensemble (25) et on fixe l'extrémité coupée de la feuille conductrice (42) sur ledit second ensemble (29) par collage.

6. Procédé selon l'une quelconque des revendications précédentes, **caractérisé en ce qu'**on rétracte la gaine protectrice (31) élastique par une technique de rétraction à froid.

7. Procédé selon l'une quelconque des revendications précédentes, **caractérisé en ce que** ledit tube est revêtu d'un film glissant, ou d'une ou plusieurs surfaces glissantes.

8. Procédé selon l'une quelconque des revendications précédentes, **caractérisé en ce que** la feuille conductrice (42) est en métal.

9. Procédé selon la revendication 8, **caractérisé en ce que** la feuille conductrice (42) est en cuivre recuit ou étamé.

10. Procédé selon la revendication 8, **caractérisé en ce que** la feuille conductrice (42) est en aluminium étamé.

11. Procédé selon l'une quelconque des revendications 1 à 7, **caractérisé en ce que** la feuille conductrice (42) est réalisée en un ou plusieurs matériaux composites.

12. Procédé selon l'une quelconque des revendications précédentes, **caractérisé en ce que** la gaine protectrice (31) élastique est en éthylène propylène diène monomère EPDM ou en silicone.

13. Procédé selon la revendication 7, **caractérisé en ce que** la feuille conductrice (42) est réalisée par dépôt électrolytique de cuivre sur un tambour.

14. Procédé selon l'une quelconque des revendications 1 à 12, **caractérisé en ce que** la feuille conductrice (42) est réalisée par laminage ou co-laminage.

15. Jonction entre les écrans de deux câbles électriques, **caractérisé en ce qu'**elle est réalisée par un procédé de fabrication selon l'une quelconque des revendications précédentes.
